(19) Europäisches Patentamt
European Patent Office
Office européen des brevets

(11) **EP 4 794 101 A1**

(12) **EUROPEAN PATENT APPLICATION**

(43) Date of publication:
**19.08.2026 Bulletin 2026/34**

(21) Application number: **26157424.8**

(22) Date of filing: **10.02.2026**

(51) International Patent Classification (IPC):
***H01M 50/46*** *(2021.01)* ***H01M 50/489*** *(2021.01)*
***H01M 50/417*** *(2021.01)* ***H01M 50/449*** *(2021.01)*
***H01M 50/451*** *(2021.01)* ***H01M 50/457*** *(2021.01)*
***H01M 10/0525*** *(2010.01)*

(52) Cooperative Patent Classification (CPC):
**H01M 50/461; H01M 10/0525; H01M 50/409; H01M 50/417; H01M 50/443; H01M 50/446; H01M 50/449; H01M 50/451; H01M 50/457; H01M 50/489; H01M 50/491;** Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.02.2025 CN 202510158167**

(71) Applicant: **AESC Japan Ltd.**
**Yokohama-shi, Kanagawa 220-0012 (JP)**

(72) Inventor: **RAO, Xianmeng**
**Jiangyin City, Wuxi City (CN)**

(74) Representative: **Becker, Eberhard**
**Becker Kurig & Partner**
**Patentanwälte mbB**
**Bavariastraße 7**
**80336 München (DE)**

(54) **SEPARATOR AND ELECTROCHEMICAL DEVICE**

(57) Disclosed are a separator (100) and an electrochemical device, specifically relating to the battery technology field. The separator (100) includes a porous base film (101), a heat-resistant layer (102) and an adhesive layer (103), wherein the heat-resistant layer (102) is disposed on at least one surface of the porous base film (101). The adhesive layer (103) is at least disposed on a surface of the heat-resistant layer (102) opposite to a surface in contact with the porous base film (101). An effective adhesion degree R-value of the separator (100) on a side where the heat-resistant layer (102) is provided is 40%-80%, and a difference between a maximum value and a minimum value of the effective adhesion degree R-value is <30%; wherein the effective adhesion degree R-value indicates a ratio of an effective adhesion area to a theoretical adhesion area of the separator (100).

100
103
102
101

FIG. 1

EP 4 794 101 A1

## Description

BACKGROUND

Technical Field

The present disclosure relates to the field of battery technology, and specifically relates to a separator and an electrochemical device.

Description of Related Art

As one of the critical components of a battery, a separator not only serves to isolate the positive and negative electrodes to prevent short-circuiting, but its porous structure also provides channels for the migration and transport of lithium-ions. At present, commercially available separators are predominantly polyolefin-based. Such materials have relatively low melting points and are prone to substantial shrinkage at elevated temperatures, which may result in contact between the positive and negative electrodes and the rapid accumulation of heat, thereby causing the battery to ignite or explode due to short-circuiting and compromising the safety performance of the battery. In order to improve the heat resistance and safety performance of the separator, a heat-resistant layer is typically coated on one side of the separator substrate, whereby heat-resistant materials within the heat-resistant layer enhance the heat resistance of the separator and, to some extent, increase adhesion of the separator. Additionally, in some circumstances, an adhesive layer is further disposed on the heat-resistant layer; upon hot-pressing with the positive and negative electrode sheets, the adhesive layer is activated to generate adhesion, thereby contributing to the dimensional shaping and stabilization of the battery.

However, following multiple cycling, an active material of electrode sheets, particularly that of the negative electrode sheet, is prone to swelling. Where the distribution of adhesion between the separator and the positive and negative electrodes is non-uniform, and the adhesion between the separator and the positive and negative electrodes is inadequate, swelling of the electrode sheets is liable to produce points of delamination or misalignment among the positive electrode, the negative electrode, and the separator, thereby providing space for the release of stress generated by such swelling, resulting in overall wrinkling and deformation of the cell and, consequently, a reduction in the cycle life of the battery. If, on that basis, the quantity of adhesive in an adhesive layer is merely increased, although such increase can enhance the adhesion between the electrode sheets and the adhesive layer of the separator during a hot-pressing stage of cell fabrication, after hundreds of battery cycles the separator will develop points of delamination or misalignment between the heat-resistant layer and the adhesive layer, manifesting as wrinkling deformation of the cell concomitant with electrode-sheet swelling and thereby impairing the cycling performance of the battery.

SUMMARY

Given the problems existing in the above related art, the present disclosure provides a separator and an electrochemical device to improve the problem of cell wrinkling and deformation after long-term cycling of the battery.

To achieve the above objectives and other related objectives, a first aspect of the present disclosure provides a separator, the separator includes a porous base film, a heat-resistant layer and an adhesive layer. The heat-resistant layer is disposed on at least one surface of the porous base film. The adhesive layer is at least disposed on a surface of the heat-resistant layer opposite to a surface in contact with the porous base film. An effective adhesion degree R-value of a side of the separator provided with the heat-resistant layer is 40%-80%, and a difference between a maximum value and a minimum value of the effective adhesion degree R-value is <30%, wherein, the effective adhesion degree R-value indicates a ratio of an effective adhesion area of the separator to a theoretical adhesion area. The separator of the present disclosure maintains specific adhesion between the separator and an electrode sheet by adjusting the ratio of the effective adhesion area to the theoretical adhesion area, and at the same time, controls a difference of the ratio of the effective adhesion area to the theoretical adhesion area to below 30%, so that the adhesion uniformity between the separator and the electrode sheet is ensured, thereby improving the cell wrinkling and deformation caused by electrode sheet expansion after battery cycling, improving a flatness of the cell, and further improving the cycling performance of the battery.

In an embodiment of the present disclosure, a surface roughness Ra of the heat-resistant layer is <1$\mu$m. Further, by adjusting the surface roughness of the heat-resistant layer of the separator, a flatness of a microscopic morphology of the heat-resistant layer surface may be adjusted. Within a limited range, a surface flatness of the heat-resistant layer is high, and compared with the uneven state of high and low undulations, it is possible to ensure the uniform distribution of effective contact points between the heat-resistant layer and the adhesive layer while improving the overall effective contact area, thereby enhancing the adhesion of the adhesive layer on the surface of the heat-resistant layer and the uniform distribution of the adhesion, so as to improve the overall flatness and anti-wrinkling ability of the cell.

In an embodiment of the present disclosure, the heat-resistant layer includes inorganic particles and an

adhesive, a packing density of the heat-resistant layer is A = (0.4~0.5)$\times\rho$, wherein $\rho$ indicates a true density of the inorganic particles, and a unit of measurement is g/cm$^3$.

In an embodiment of the present disclosure, the heat-resistant layer includes the inorganic particles and the adhesive, a particle size standard deviation of the inorganic particles is $\sigma\leq0.9*d$, and d indicates a thickness of the heat-resistant layer. In addition, further limitation on the particle size standard deviation or the packing density of the inorganic particles in the heat-resistant layer enables the packing of the heat-resistant layer to be denser, and the effective adhesion area between the adhesive layer and the heat-resistant layer is improved. When the adhesion between the separator and the positive and negative electrodes is activated through hot pressing, the uniformity of the separator adhesion is ensured, and an adhesion strength is further improved through the dense heat-resistant layer, thus obtaining a better cell shaping effect and enhancing the performance of the cell.

In an embodiment of the present disclosure, a volume ratio of the inorganic particles in the heat-resistant layer is 80%-99%.

In an embodiment of the present disclosure, a single-side thickness of the heat-resistant layer is 0.5$\mu$m-5$\mu$m.

In an embodiment of the present disclosure, the inorganic particles are selected from at least one of alumina, hydrated alumina, aluminum hydroxide, silicon dioxide, titanium dioxide, barium sulfate, barium titanate, magnesium hydroxide, and magnesium oxide.

In an embodiment of the present disclosure, a single-side coating amount of the adhesive layer is 0.1g/m$^2$-2g/m$^2$.

In an embodiment of the present disclosure, the adhesive is selected from at least one of polyacrylonitrile and copolymers thereof, polyacrylic acid and copolymers thereof, polyacrylate and copolymers thereof, styrene-butadiene copolymer, styrene-acrylate copolymer, and fluorine-based polymer materials.

A second aspect of the present disclosure provides an electrochemical device, the electrochemical device includes a positive electrode sheet, a negative electrode sheet, and a separator provided between the positive electrode sheet and the negative electrode sheet, and the separator is the separator in any of the above embodiments.

## BRIEF DESCRIPTION OF THE DRAWINGS

In order to more clearly illustrate the technical solutions in the embodiments of the present disclosure or the related art, the drawings required for use in the description of the examples or the related art will be briefly introduced below. Obviously, the drawings in the following description are only some examples of the present disclosure. For those of ordinary skill in the art, other examples may also be obtained according to these drawings without creative effort.

FIG. 1 is a schematic structural diagram of the separator of the present disclosure in an embodiment;
FIG. 2 is a schematic diagram of the internal particle structure of the separator of the present disclosure in an embodiment;
FIGs. 3A-3E shows the flatness condition of the negative electrode surface after cycle disassembly of the battery assembled with the separator of the present disclosure, wherein FIG. 3A is a photograph of flatness grade A, FIG. 3B is a photograph of flatness grade B, FIG. 3C is a photograph of flatness grade C, FIG. 3D is a photograph of flatness grade D, and FIG. 3E is a photograph of flatness grade E.

Descriptions of reference numerals:

100. separator; 101. porous base film; 102. heat-resistant layer; 103. adhesive layer.

## DESCRIPTION OF THE EMBODIMENTS

The embodiments of the present disclosure are illustrated below through specific examples, and those skilled in the art may easily understand other advantages and effects of the present disclosure from the content disclosed in this specification. The present disclosure may also be implemented or applied through other different specific embodiments, and various details in this specification may also be modified or changed based on different viewpoints and applications without departing from the spirit of the present disclosure. It should be noted that the following examples and features in the examples may be combined with each other without conflict. It should also be understood that the terms used in the embodiments of the present disclosure are for describing specific embodiments, rather than for limiting the protection scope of the present disclosure.

Unless otherwise defined, all technical and scientific terms used herein have the same meaning as commonly understood by those skilled in the technical field of the present disclosure. The terms used herein in the specification of the present disclosure are only for the purpose of describing specific embodiments and are not intended to limit the present disclosure. The term "and/or" used herein includes any and all combinations of one or more related listed items.

Herein, when a numerical range is involved, unless otherwise specified, the distribution of selectable values

within the numerical range is considered continuous, and includes two numerical endpoints (i.e., the minimum value and the maximum value) of the numerical range, as well as each value between these two numerical endpoints. When multiple numerical ranges are provided to describe features or characteristics, these numerical ranges may be combined.

Herein, "multiple", "various", "several times" and the like, unless otherwise specified, refer to a quantity greater than or equal to 2. For example, "one or more" indicates one or greater than or equal to two.

Herein, "further", "furthermore", "particularly" and the like are used for descriptive purposes to indicate differences in content, but should not be understood as limitations on the protection scope of the present disclosure.

The definitions of technical terms involved herein are as follows:

Effective adhesion degree R-value: A ratio of the effective adhesion area of the separator to the theoretical adhesion area, wherein the theoretical adhesion area refers to an area that may be covered by the separator adhesive layer, i.e., a surface area of the separator adhesive layer, and the effective adhesion area refers to an area where the separator adhesive layer exerts an adhesive effect, i.e., a surface area retained on an object being adhered after the separator adhesive layer is separated from the object being adhered. A difference of the effective adhesion degree R-value refers to a difference between a maximum value and a minimum value of the R-value.

Surface roughness: An unevenness of small spacing and micro peaks and valleys on a surface; the rougher the surface, the smaller the effective contact area between the surface and other surfaces.

Packing density: A mass per unit volume of a material including a material entity, internal pores (open pores and closed pores), and inter-particle voids.

True density: True density is also known as real density, referring to a mass per unit volume of a material in an absolutely dense state. True density refers to a density obtained by dividing a powder mass by the volume (true volume) excluding the voids inside and outside the particles. A calculation formula for true density is $\rho=m/v$, wherein: $\rho$ indicates the true density, m indicates a mass of a sample, and v indicates a volume of the sample.

Particle size: A size of particles, normally expressed by diameter. For spherical particles, the particle size is the diameter; for non-spherical particles, the particle size is described by equivalent diameter (such as volume equivalent diameter, area equivalent diameter, etc.).

Particle size standard deviation: Particle size standard deviation reflects a degree of dispersion of particle size in a particle system, the larger the standard deviation, the more uneven the particle size distribution; the smaller the standard deviation, the more concentrated the particle size distribution.

The calculation formula for particle size standard deviation $\sigma$ is:

$$\sigma = \sqrt{\frac{1}{N}\sum_{i=1}^{N}(D_i - \bar{D})^2}$$

Wherein, $D_i$ is a particle size of a single particle, $\overline{D}$ is an average particle size, and N is a total number of particles.

Single-side coating amount: Single-side coating amount refers to a coating amount of slurry on a surface during a preparation process.

In this context, parameters such as the effective adhesion degree R-value, the difference between the maximum value and the minimum value of the effective adhesion degree R-value, the particle size standard deviation of the inorganic particles, a surface roughness of the heat-resistant layer, and a packing density of the heat-resistant layer are affected by various aspects of the separator production and preparation process, such as material selection, slurry preparation, coating method, selection of production line equipment, and setting of equipment parameters. Those skilled in the art should understand that the adjustment of the separator structure may be achieved through at least the following single or combined controls to obtain the corresponding separator. It should be noted that the following description is an example of a manufacturing method for obtaining the corresponding separator, and is not limited to this method.

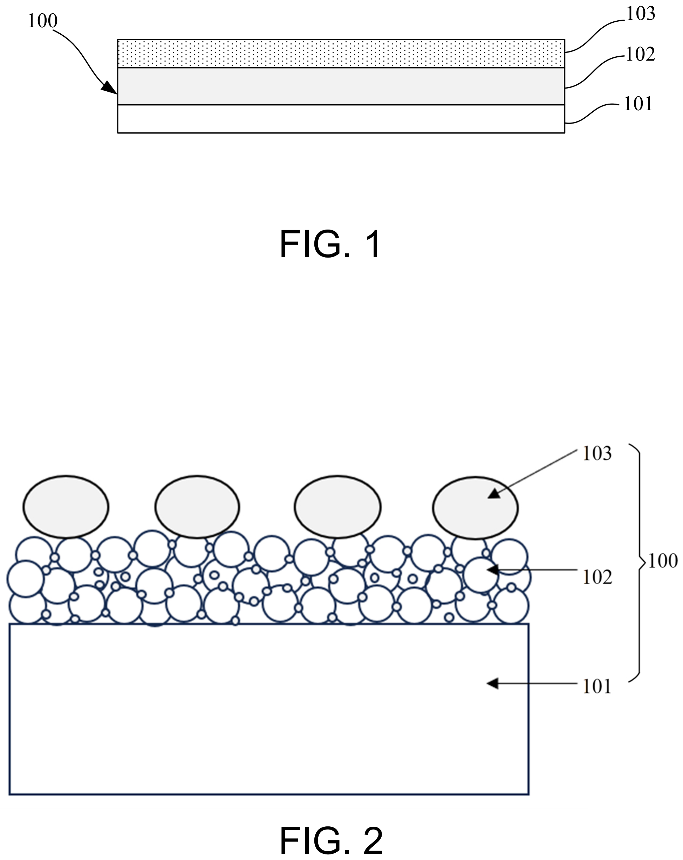

Please refer to FIG. 1, a first aspect of the present disclosure provides a separator 100. The separator 100 includes a porous base film 101, a heat-resistant layer 102 and an adhesive layer 103. The porous base film 101 serves as a substrate of the separator 100, and adopts a porous material that is insulating and allows lithium-ions to pass through. The heat-resistant layer 102 is disposed on at least one surface of the porous base film 101, for example, the porous base film 101 has a first surface and a second surface opposite to each other along a thickness direction thereof. The heat-resistant layer 102 may be disposed on one of the first surface and the second surface of the porous base film 101, or may be disposed on both the first surface and the second surface (FIG. 1 only exemplarily shows the case of single-side setting). The adhesive layer 103 is at least disposed on a surface of the heat-resistant layer 102 opposite to a surface in contact with the porous base film 101, that is, the adhesive layer 103 may be only disposed on the heat-resistant layer 102, in this case, the adhesive layer 103 is disposed on a side of the heat-resistant layer 102 facing away from the porous base film 101.

As an example, the adhesive layer 103 may also be disposed on both the heat-resistant layer 102 and the porous base film 101 simultaneously. In this case, the heat-resistant layer 102 is only disposed on a surface of the porous base film 101, and the adhesive layer 103 is disposed on a side of the heat-resistant layer 102 facing away from the porous base film 101 and a side of the porous base film 101 where the heat-resistant layer 102 is not provided.

In some embodiments, the porous base film 101 serving as a substrate of the separator 100 may be selected from any porous material that may be used in separators in the art. As an example, the porous base film 101 is selected from one or more of polyethylene, polypropylene, non-woven fabric, polyethylene terephthalate, polyimide, and polypropylene-polyethylene-polypropylene composite film. That is, the porous base film 101 may be selected from any one of the above enumerated materials, such as polyethylene, non-woven fabric, polypropylene or polyimide, etc., or a mixture of the same material with different weight average molecular weight, viscosity average molecular weight, or number average molecular weight. The porous base film 101 may also be selected from a combination of any two or more of the above enumerated materials, for example, the porous base film 101 is selected from a combination of polyethylene and polypropylene, or a combination of non-woven fabric, polyethylene terephthalate and polyimide, etc. For the manufacturing method of the porous base film, there is no particular limitation as long as the porous base film 101 having the above characteristics may be obtained. Hereinafter, the manufacturing method of the porous base film is exemplified: forming a porous film by melting and extruding polymer resin; or forming a non-woven fabric by aggregating filaments obtained by melting/spinning polymer resin; or a composite film of two or more layers of substrates prepared by the above two methods, etc.

A thickness and porosity of the porous base film 101 may be set according to actual production needs, and are not limited herein. As an example, the thickness of the porous base film 101 is 3μm-20μm, for example, the thickness of the porous base film 101 may be 3μm, 5 μm, 10μm, 15μm or 20μm, etc. The porosity of the porous base film 101 is 20%-70%, for example, the porosity of the porous base film 101 may be 20%, 40%, 60% or 70%, etc.

The above porous base film 101 has a relatively low melting point and is prone to significant shrinkage at high temperatures, thereby affecting the safety performance of the battery. Therefore, the separator 100 of the present disclosure is provided with the heat-resistant layer 102 on at least one side of the porous base film 101 to improve the heat resistance performance of the separator 100.

Referring to FIG. 1 and FIG. 2, in an embodiment, the heat-resistant layer 102 includes inorganic particles and an adhesive, wherein the inorganic particles may be selected from high-temperature resistant ceramic materials, including but not limited to at least one of alumina, hydrated alumina (boehmite), aluminum hydroxide, silicon dioxide, titanium dioxide, barium sulfate, barium titanate, magnesium hydroxide, and magnesium oxide. That is, the inorganic particles may be selected from any one of the above-enumerated materials, for example, alumina, or titanium dioxide, or magnesium oxide, etc., and the inorganic particles may also be selected from a combination of any two or more of the enumerated materials, for example, a combination of barium sulfate and barium titanate, or a combination of alumina, hydrated alumina and aluminum hydroxide, etc. It should be noted that when the inorganic particles are a combination of two or more materials, there is no limit to a ratio between the components in the combination, and they may be mixed in any ratio. The adhesive is selected from at least one of polyacrylonitrile and copolymers thereof, polyacrylic acid and copolymers thereof, polyacrylate and copolymers thereof, acrylates, styrene-butadiene copolymer, styrene-acrylate copolymer, and fluorine-based polymer materials. That is, the adhesive may be selected from any one of the above-enumerated materials, for example, polyacrylonitrile, or polyacrylic acid, or polyacrylate, or polyacrylate salt, or styrene-butadiene copolymer, etc., and the adhesive may also be selected from a combination of any two or more of the above-enumerated materials, for example, a combination of styrene-acrylate copolymer and fluorine-based polymer materials.

The heat-resistant layer 102 may be prepared by the following method: first, the inorganic particles, the adhesive and a solvent are mixed and stirred uniformly according to a ratio to obtain a slurry of the heat-resistant layer, then the slurry of the heat-resistant layer is coated on the surface of the porous base film 101, and the heat-resistant layer 102 is obtained after curing and drying. The amount of the above solvent does not need to be particularly limited and may be selected according to actual production needs, based on the ability to uniformly disperse the inorganic particles and adhesive. As an example, an amount of the solvent satisfies a solid content of the slurry of the heat-resistant layer of 35wt%-45wt%, which may be specifically enumerated as 35wt%, 40wt% or 45wt%, etc. The solvent is, for example, deionized water.

In an example, a thickness of the heat-resistant layer 102 may be set according to actual needs. As an example, a single-side thickness of the heat-resistant layer 102 is 0.5μm-5μm. For example, the single-side thickness of the heat-resistant layer 102 may be 0.5μm, 2μm, 3μm or 5μm, etc.

Regarding the adhesive layer 103, the adhesive layer 103 is disposed on the porous base film 101 or the heat-resistant layer 102 as an outermost layer of the separator, and may bond with electrodes through the adhesive layer 103. For the adhesive included in the adhesive layer 103, there is no particular limitation as long as the adhesive may bond with the electrodes. The adhesive in the adhesive layer 103 is selected from at least one of polyacrylonitrile and copolymers thereof, polyacrylic acid and copolymers thereof, polyacrylate and copolymers thereof, acrylates, styrene-butadiene copolymers, styrene-acrylate copolymers, and fluorine-based polymer materials. That is, the adhesive may be selected from any one of the above-enumerated materials, for example, polyacrylonitrile, or polyacrylic acid, or polyacrylate, or

polyacrylate salt, or styrene-butadiene copolymer, etc. The adhesive may also be selected from a combination of any two or more of the above-enumerated materials, for example, a combination of styrene-acrylate copolymer and fluorine-based polymer materials.

The adhesive layer 103 may be prepared by the following method: the adhesive, the solvent or other additives are mixed and stirred uniformly according to a ratio to obtain a slurry of the adhesive layer, which is coated on the porous base film 101 or the heat-resistant layer 102, and the solvent is removed by drying and evaporation, thereby obtaining the adhesive layer 103.

For the method of coating the heat-resistant layer 102 and the adhesive layer 103, there is no particular limitation as long as the method may achieve the necessary layer thickness and coating area. Examples may be enumerated such as a gravure coating method, a small-diameter gravure coating method, a reverse roller coating method, a transfer roller coating method, a matching roller coating method, a dip coating method, a blade coating method, an air knife coating method, a knife coating method, a bar coating method, a squeeze coating method, a cast coating method, a die coating method, a screen printing method, and a spray coating method.

During the battery cycle process, the detachment or misalignment points generated between the positive and negative electrodes and the separator due to electrode expansion may cause overall wrinkling and deformation of the cell, thereby reducing the cycle life of the battery. The inventors of the present application found in research that: the overall wrinkling and deformation of the cell may be overcome by controlling the effective adhesion degree R-value of a side of the separator provided with the heat-resistant layer within a range of 40%-80%, and controlling the R-value difference (the difference between the maximum value and the minimum value) to be 30% or less. In this way, the adhesion distribution between the separator and the electrode is uniform and has a specific adhesion. When the negative electrode expands after charging, a binding strength between the positive and negative electrodes and the separator is improved, thereby mitigating the problems of cell wrinkling and deformation and low battery cycling performance.

In the present disclosure, the effective adhesion degree R-value of a side of the separator provided with the heat-resistant layer is 40%-80%, and further, the R-value may be 50%-70%, and may be specifically enumerated as 50%, 60% or 80%, etc. If the R-value is too low, the adhesion between the separator and the electrode is poor, the shaping effect of the bare cell is poor, and cell deformation and expansion are likely to occur. The uneven resistance on the interface leads to increased polarization, and the capacity loss generated during the cycle process increases, making the lithium plating window of the cell narrower. If the R-value is too high, the remaining space between the separator and the electrode is too small, and the retention amount of the electrolyte will be greatly reduced. In a later stage of the cycle, an electrolyte is insufficient, and purple spot problems are likely to occur. In the meantime, the difference between the maximum value and the minimum value of the effective adhesion degree R-value is <30%; furthermore, the R-value difference is <20%, and may be specifically enumerated as 1%, 10%, 15%, 29%, etc. The smaller the R-value difference, the more uniform the adhesion distribution between the separator 100 and the electrode, which may effectively improve the cell wrinkling and deformation caused by electrode expansion after cycling, and improve the flatness. Here, a structural morphology and distribution of the adhesive layer 103 on the heat-resistant layer 102 side may be regulated by at least adjusting a weight ratio of the adhesive in the adhesive layer 103, a coverage rate of the adhesive layer 103 on the heat-resistant layer 102, a surface density of the adhesive layer 103, and coating equipment parameters of the adhesive layer 103, so as to adjust the effective adhesion degree R-value or R-value difference of a side of the separator 100 provided with the heat-resistant layer 102.

In an embodiment, the surface roughness Ra of the heat-resistant layer 102 is <1μm, and further, the surface roughness Ra of the heat-resistant layer 102 is <0.8μm. A magnitude of the surface roughness of the heat-resistant layer 102 reflects a flatness of the surface of the heat-resistant layer 102. The flatness of the heat-resistant layer 102 affects an effective contact area of the adhesive layer 103 attached to the surface of the heat-resistant layer 102. The smaller the roughness, the flatter the surface of the heat-resistant layer 102, the more uniform the distribution of effective contact points with the adhesive layer 103, and the more uniform the distribution of adhesion points between the separator and the positive and negative electrodes. In the meantime, improving the overall effective contact area will also enhance the overall adhesion of the adhesive layer 103 on the surface of the heat-resistant layer 102, which may further effectively mitigate the cell wrinkling and deformation caused by electrode expansion after cycling, improve the flatness, and further improve the cycling performance of the battery. If the surface roughness Ra of the heat-resistant layer 102 is >1μm, the surface of the heat-resistant layer 102 is relatively not flat enough and has pits. When the adhesive layer 103 is coated on the surface of the heat-resistant layer 102, the pit positions on the surface of the heat-resistant layer 102 cannot have good contact with the adhesive layer 103, and may only have partial contact or no contact at all. The uniformity and area of the attachment points of the adhesive layer 103 on the surface of the heat-resistant layer 102 will be relatively reduced. Here, the effect of the slurry of the heat-resistant layer 102 during leveling or after shaping may be adjusted by at least adjusting the solid content of the slurry of the heat-resistant layer 102, a particle size of the inorganic particles in the heat-resistant layer 102, and a drying process of the heat-resistant layer 102, so as to achieve the adjustment of the surface roughness Ra of the heat-resistant layer 102.

In an embodiment, the packing density of the heat-resistant layer 102 is $A=(0.4\sim0.5)\times\rho$, wherein $\rho$ indicates a

true density of the inorganic particles, in units of g/cm$^3$. That is, the packing density of the heat-resistant layer 102 is related to the type of inorganic particles. For example, if the inorganic particles are boehmite, and the true density of boehmite is 3.07g/cm$^3$, then a range of packing density should be limited to between 1.228g/cm$^3$-1.535 g/cm$^3$. The packing density A of the heat-resistant layer 102 may be specifically enumerated as 0.4ρ, 0.45ρ or 0.5ρ, etc. The packing density of the heat-resistant layer 102 satisfying the above conditions may enable the packing morphology of the heat-resistant layer 102 to be more dense, further improve the adhesion between the heat-resistant layer 102 and the adhesive layer 103, obtain a better cell shaping effect, and enhance the performance of the cell. Here, the packing density of the heat-resistant layer 102 may be adjusted by at least a transfer rate during coating when the slurry of the heat-resistant layer 102 is transferred to the porous base film 101, a viscosity of the slurry of the heat-resistant layer 102, and the drying process of the heat-resistant layer 102.

In an embodiment, the particle size standard deviation of the inorganic particles is $\sigma \leq 0.9 * d$, where d indicates the thickness of the heat-resistant layer. Heat-resistant particles with uniform particle size are selected for packing to obtain a uniform, smooth and dense packing morphology, further improving the overall effective adhesion area of the separator, and making the overall adhesion strength of the separator better. Specifically, for example, when the thickness of the heat-resistant layer is 2μm, the particle size standard deviation σ of the inorganic particles may be 0.1μm, 0.5μm, 1.0μm or 1.8μm, etc. The smaller the particle size standard deviation σ of the inorganic particles, the more uniform the particle size. As a method for adjusting the particle size distribution of the inorganic particles, methods may be enumerated such as using a ball mill, a bead mill, a jet mill, and so on to pulverize an inorganic filler for adjustment to the desired particle size distribution, or a method of mixing after adjusting fillers with multiple particle size distributions, etc.

In an embodiment, a volume ratio of the inorganic particles in the heat-resistant layer 102 of the present disclosure is 80% or more. If the volume ratio of the inorganic particles in the heat-resistant layer 102 is lower than 80%, a heat resistance capability of the heat-resistant layer 102 is limited, and a volume ratio of the adhesive in the heat-resistant layer 102 may be too high, which may easily cause pore closure of the coating due to adhesive swelling during the cell cycle, thereby affecting a cycle capability of the cell. Further, the volume ratio of the inorganic particles in the heat-resistant layer 102 is 90% or more. Furthermore, the volume ratio of the inorganic particles in the heat-resistant layer 102 is 90%-99%, which may be specifically enumerated as 93%, 95%, 97%, etc. If the volume ratio of the inorganic particles exceeds 99%, the heat-resistant layer 102 is not readily formable.

In an embodiment, the single-side coating amount of the adhesive layer 103 is 0.1g/m$^2$-2g/m$^2$, that is to say, during the process of preparing the separator, when preparing the adhesive layer 103, the slurry of the adhesive layer is coated at 0.1g-2g per square meter of coating surface for preparation. Further, the single-side coating amount of the adhesive layer 103 is 0.5g/m$^2$-1.5g/m$^2$; furthermore, the single-side coating amount of the adhesive layer 103 may be 0.8g/m$^2$, 1.0g/m$^2$ or 1.5g/m$^2$, etc.

A second aspect of the present disclosure provides an electrochemical device, the electrochemical device includes the separator 100 described above in the present disclosure. The electrochemical device of the present disclosure may be any energy storage device known in the art, such as a supercapacitor, a lithium-ion secondary battery, a sodium-ion secondary battery, etc. The structure of the electrochemical device is described below using a lithium-ion secondary battery as an example.

The lithium-ion secondary battery includes a positive electrode sheet, a negative electrode sheet and a separator, wherein the separator is provided between the positive electrode sheet and the negative electrode sheet, and forms a bare cell with the positive electrode sheet and the negative electrode sheet through packing or winding.

Specifically, the positive electrode sheet includes a positive electrode current collector and a positive electrode active material layer disposed on at least one side surface of the positive electrode current collector. The positive electrode current collector is, for example, a foil formed by surface treatment of nickel, titanium, aluminum, silver, stainless steel or carbon, etc. In addition to foil, the positive electrode current collector may also adopt any one or a combination of various forms such as film, mesh, porous, foam or non-woven fabric. A thickness of the positive electrode current collector is, for example, 8μm-15μm. In this embodiment, the positive electrode current collector is, for example, aluminum foil, and a thickness of the aluminum foil is, for example, 13μm. The positive electrode active material layer includes a positive electrode active material, a positive electrode conductive agent and a positive electrode binder. The positive electrode active material, the positive electrode conductive agent and the positive electrode binder are not specifically limited here, and those skilled in the art may make selection according to actual requirements.

The positive electrode active material may be selected from any material used in lithium-ion batteries, that is, compounds that may reversibly intercalate and deintercalate lithium-ions may be used. In the present disclosure, the positive electrode active material is selected from one or a combination of lithium cobalt oxide, lithium manganese oxide, lithium iron phosphate, and nickel cobalt manganese metal oxide (NCM), but is not limited thereto. The positive electrode binder is, for example, selected from any one or more of Polyvinylidene Fluoride (PVDF), Poly(ethylene oxide) (PEO), Polyamide (PA), Polyacrylonitrile (PAN), Polyacrylate, Polyvinylether, Polymethyl Methacrylate (PMMA), Ethylene-Propylene-Diene Monomer (EPDM), Polyhexafluoropropylene or Polymerized Styrene Butadiene Rubber (SBR), etc. The positive electrode conductive agent is, for example, selected from one or at least two of conductive carbon black

(Super P, Super S, 350G, etc.), acetylene black, graphene, carbon nanotubes, carbon fiber (VGCF), Ketjen black, etc.

The negative electrode sheet includes a negative electrode current collector and a negative electrode active material layer disposed on at least one side surface of the negative electrode current collector. The negative electrode current collector is, for example, selected from one of a copper foil current collector, a composite copper foil current collector, a carbon current collector, a foam copper current collector or a stainless steel current collector, etc., and a thickness of the negative electrode current collector is, for example, 8μm to 15μm. In this example, the negative electrode current collector is copper foil, and a thickness of the copper foil is, for example, 13μm. The negative electrode current collector has two surfaces opposite in its own thickness direction, and the negative electrode active material layer is disposed on either one or both of the two opposite surfaces of the negative electrode current collector. The negative electrode active material layer includes a negative electrode active material, a negative electrode conductive agent, a negative electrode binder and a thickener. The specific types of the negative electrode active material, the negative electrode conductive agent and the negative electrode binder are not specifically limited here, and materials known in the art that may be used in lithium-ion batteries may be adopted, and those skilled in the art may make selection according to actual requirements.

The negative electrode active material is selected from compounds capable of intercalating-deintercalating lithium-ions. In this example, the negative electrode active material includes but is not limited to artificial graphite, natural graphite, etc. The negative electrode conductive agent is selected from one or more of acetylene black, conductive carbon black (Super P, Super S, 350G), carbon fiber (VGCF), carbon nanotubes (CNT), and Ketjen black. The negative electrode binder is selected from any one of polyacrylic acid (PAA), sodium polyacrylate (PAAS), polyacrylamide (PAM), polyvinyl alcohol (PVA), styrene-butadiene rubber (SBR), or a combination of several mixed in any ratio; the thickener is selected from sodium carboxymethyl cellulose (CMC-Na) or lithium carboxymethyl cellulose (CMC-Li).

The lithium-ion battery further includes an electrolyte, which may be a solid electrolyte or a liquid electrolyte. In this example, the electrolyte is a liquid electrolyte (i.e., electrolyte solution). The liquid electrolyte includes a lithium salt and an organic solvent. The present application does not limit the specific types of the lithium salt and the organic solvent, and lithium salts and organic solvents commonly known in the art may be selected. As an example, the lithium salt is selected from one or more of $LiPF_6$, $LiBF_4$, $LiN(SO_2F)_2$ (abbreviated as LiFSI), $LiN(CF_3SO_2)_2$ (abbreviated as LiTFSI), $LiClO_4$, $LiAsF_6$, $LiB(C_2O_4)_2$ (abbreviated as LiBOB), and $LiBF_2C_2O_4$ (abbreviated as LiDFOB). Further, the organic solvent adopts a non-aqueous organic solvent, and the non-aqueous organic solvent includes any type of carbonate and/or carboxylate. The carbonate includes cyclic carbonate and/or chain carbonate. The non-aqueous organic solvent may also include halogenated compounds of carbonate. Specifically, the organic solvent is selected from one or more of ethylene carbonate (EC), propylene carbonate (PC), butylene carbonate, pentylene carbonate, fluoroethylene carbonate, dimethyl carbonate, diethyl carbonate (DEC), dipropyl carbonate, ethyl methyl carbonate, γ-butyrolactone, methyl formate, ethyl formate, ethyl propionate, propyl propionate, and tetrahydrofuran. The solvents enumerated above may be used alone or in combination, preferably in combination, which may improve the comprehensive performance of the electrolyte solution. Specifically, the solvent may be a combination of diethyl carbonate, dimethyl carbonate and ethylene carbonate, or a combination of methyl formate, fluoroethylene carbonate and propyl propionate, etc.

Furthermore, some additives may also be added to the electrolyte solution according to actual needs, such as ethylene sulfate (DTD), 1,3-propanesultone (PS), vinylene carbonate (VC), or vinyl ethylene carbonate (VEC), etc.

The lithium-ion secondary battery further includes a housing. The shape and material of the housing are related to the type of the lithium-ion battery. For example, when the lithium-ion battery is a pouch battery, an aluminum-plastic film may be selected for packaging the housing; when the lithium-ion battery is a prismatic-housing battery or a cylindrical battery, a prismatic housing or a cylindrical housing matching the shape of the bare cell may be adopted for the housing, and the material may be selected from stainless steel and other materials.

The lithium-ion secondary battery may be prepared according to methods commonly known in the art, which will not be described in detail herein.

The technical solutions of the present disclosure are described in detail below through several specific examples and comparative examples. Unless otherwise specified, the raw materials and reagents used in the following examples are commercially available products, or may be prepared by conventional methods in the art, and the instruments used in the examples are all commercially available.

[Examples 1-3]

This example provides a separator. The separator includes a porous base film, a heat-resistant layer, and an adhesive layer. The porous base film is a 7μm porous polyethylene film. The heat-resistant layer includes inorganic particles and an adhesive. In this example, the heat-resistant layer is disposed on both surfaces of the porous base film. The adhesive layer includes the adhesive, and the adhesive layer is disposed on the other surface of the heat-resistant layer opposite to the surface in contact with the porous base film. The types and amounts of materials in the heat-resistant layer and the adhesive layer are shown in the preparation method and Table 1.

The preparation method of the separator is as follows:
In the first step, deionized water and boehmite with a particle size distribution standard deviation $\sigma$ of 2.05μm are added into a double planetary mixer, and dispersed at high speed at 40°C for 1 hour; then the adhesive selected from polyacrylonitrile is added, and stirred at low speed at room temperature for 1 hour to obtain a slurry of the heat-resistant layer with a solid content of 45%, wherein a dry matter ratio of boehmite to the adhesive is 95:5. Then the slurry of the heat-resistant layer is coated on both surfaces of the porous polyethylene film with a thickness of 7μm by a gravure coating method, and a single-side coating thickness of the heat-resistant layer is 2μm. The mesh size of Examples 1-3 is a mesh node of 195μm and a mesh depth of 29μm, and then dried at 45°C to obtain a separator with heat-resistant layers on both sides.

In the second step, deionized water and polyacrylonitrile-based auxiliary adhesive are added into a double planetary mixer, and stirred at low speed at room temperature for 1 hour; then polyvinylidene fluoride (PVDF) powder is added, and dispersed at high speed at 40°C for 3 hours to obtain a slurry of the adhesive layer with a solid content of 12%, wherein a dry matter ratio of PVDF to the auxiliary adhesive is 9:1. The slurry of the adhesive layer is coated on both surfaces of the separator with the heat-resistant layer by spray coating method. In Examples 1-3, a rotational speed of rotors for rotary spray coating is 8000rpm, and then dried at 45°C to obtain a separator with both the heat-resistant layer and the adhesive layer on both sides, and a coating amount of each adhesive layer is 0.5g/m$^2$. By adjusting a spacing between the rotors of a rotary spray coating head, separators with different adhesive layer coating uniformity may be prepared. In Example 1, the rotor spacing increases from left to right in increments of 16mm, with an initial spacing of 150mm. In Example 2, the rotors are equally spaced at 150mm. In Example 3, the rotor spacing increases from left to right in increments of 8mm. The comparison of the adhesive layer coating uniformity is [Example 2] > [Example 3] > [Example 1].

[Examples 4-6]

During the preparation process of the separator, the solid content of the slurry of the heat-resistant layer is adjusted to 42%, 38%, and 35%, respectively, and other processes and parameters remain consistent with Example 2.

[Examples 7-9]

During the preparation process of the separator, micro gravure rollers with different mesh aperture size designs are adopted for coating on the heat-resistant layer. In Example 7, the mesh aperture design for a micro gravure roller surface adopts a narrow opening and a large depth; in Example 9, the mesh aperture design for the micro gravure roller surface adopts a wide opening and a shallow depth; in Example 8, the mesh aperture design is intermediate between the foregoing. The mesh aperture volume is held constant across the three designs. All other procedures and parameters are identical to those set forth in Example 2. The mesh aperture sizes are as follows: Example 7-mesh node spacing 106μm and mesh aperture depth 53μm; Example 8-mesh node spacing 120μm and mesh aperture depth 47μm; Example 9-mesh node spacing 141μm and mesh aperture depth 40μm.

[Example 10]

During the preparation process of the separator, a particle size distribution standard deviation $\sigma$ of the selected boehmite is 1.80μm, and other processes and parameters remain consistent with Example 2.

[Example 11]

During the preparation process of the separator, the particle size distribution standard deviation $\sigma$ of the selected boehmite is 0.25μm, and other processes and parameters remain consistent with Example 2.

[Example 12]

During the preparation process of the separator, the particle size distribution standard deviation $\sigma$ of the selected boehmite is 1.06μm, and other processes and parameters remain consistent with Example 2.

[Example 13]

During the preparation process of the separator, the solid content of the slurry of the heat-resistant layer is adjusted to 38%, and the micro gravure roller with the same mesh aperture design as Example 8 is adopted to perform coating of the heat-resistant layer, and other processes and parameters remain consistent with Example 2.

[Example 14]

During the preparation process of the separator, the solid content of the slurry of the heat-resistant layer is adjusted to 42%, and the micro gravure roller with the same mesh aperture design as Example 9 is adopted to perform coating of the heat-resistant layer, and other processes and parameters remain consistent with Example 2.

[Example 15]

During the preparation process of the separator, the solid content of the slurry of the heat-resistant layer is adjusted to 38%, and the micro gravure roller with the same mesh aperture design as Example 7 is adopted to perform coating of the heat-resistant layer, and other processes and parameters remain consistent with Example 2.

[Example 16]

During the preparation process of the separator, the particle size distribution standard deviation σ of the selected boehmite is 1.06μm, the solid content of the slurry of the heat-resistant layer is adjusted to 38%, and the micro gravure roller with the same mesh aperture design as Example 7 is adopted to perform coating of the heat-resistant layer, and other processes and parameters remain consistent with Example 2.

[Example 17]

During the preparation process of the separator, the particle size distribution standard deviation σ of the selected boehmite is 1.80μm, the solid content of the slurry of the heat-resistant layer is adjusted to 35%, and the micro gravure roller mesh aperture is adopted, the mesh aperture size is a mesh node spacing of 92μm and a mesh aperture depth of 61μm, and other processes and parameters remain consistent with Example 2.

[Example 18]

During the preparation process of the separator, the particle size distribution standard deviation σ of the selected boehmite is 1.06μm, the solid content of the slurry of the heat-resistant layer is adjusted to 42%, and the micro gravure roller with the same mesh aperture design as Example 7 is adopted to perform coating of the heat-resistant layer, and other processes and parameters remain consistent with Example 2.

[Example 19]

During the preparation process of the separator, the particle size distribution standard deviation σ of the selected boehmite is 1.06μm, the solid content of the slurry of the heat-resistant layer is adjusted to 45%, and the micro gravure roller with the same mesh aperture design as Example 8 is adopted to perform coating of the heat-resistant layer, and other processes and parameters remain consistent with Example 2.

[Example 20]

During the preparation process of the separator, the particle size distribution standard deviation σ of the selected boehmite is 1.80μm, the solid content of the slurry of the heat-resistant layer is adjusted to 45%, and the micro gravure roller with the same mesh aperture design as Example 7 is adopted to perform coating of the heat-resistant layer, and other processes and parameters remain consistent with Example 2.

[Example 21]

During the preparation process of the separator, the particle size distribution standard deviation σ of the selected boehmite is 0.25μm, the solid content of the slurry of the heat-resistant layer is adjusted to 45%, and the micro gravure roller with the same mesh aperture design as Example 9 is adopted to perform coating of the heat-resistant layer, and other processes and parameters remain consistent with Example 2.

[Example 22]

During the preparation process of the separator, the particle size distribution standard deviation σ of the selected boehmite is 1.06μm, the solid content of the slurry of the heat-resistant layer is adjusted to 38%, and the micro gravure

roller with the same mesh aperture design as Example 8 is adopted to perform coating of the heat-resistant layer, and other processes and parameters remain consistent with Example 2.

[Example 23]

During the preparation process of the separator, the particle size distribution standard deviation $\sigma$ of the selected boehmite is 0.25μm, the solid content of the slurry of the heat-resistant layer is adjusted to 38%, and the micro gravure roller with the same mesh aperture design as Example 7 is adopted to perform coating of the heat-resistant layer, and other processes and parameters remain consistent with Example 2.

[Example 24]

During the preparation process of the separator, the particle size distribution standard deviation $\sigma$ of the selected boehmite is 1.80μm, the solid content of the slurry of the heat-resistant layer is adjusted to 35%, and the micro gravure roller with the same mesh aperture design as Example 9 is adopted to perform coating of the heat-resistant layer, and other processes and parameters remain consistent with Example 2.

[Examples 25-28]

During the preparation process of the separator, alumina, titanium dioxide, barium titanate and magnesium hydroxide are used to replace boehmite respectively, and the corresponding particle size distribution standard deviations $\sigma$ are 1.24μm, 1.26μm, 1.35μm and 1.29μm respectively, the solid content of the slurry of the heat-resistant layer is 35% in Examples 25-28, and the micro gravure roller with the same mesh aperture design as Example 8 is adopted to perform coating of the heat-resistant layer, and a rotary spray adhesive layer with the same rotor spacing as Example 2 is adopted, the coating amount of the adhesive layer on each surface is 0.5g/m$^2$, and the adhesive layer is coated on the surface of the heat-resistant layer. Other processes and parameters remain consistent with Example 2.

[Comparative Example 1]

Compared with Example 1, the spacing between the rotors of a rotary spray coating head is further increased, the rotor spacing increases sequentially from left to right in increments by 24mm, an initial spacing is 150mm, and other processes and parameters remain consistent with Example 1.

[Comparative Example 2]

Compared with Example 3, the rotational speed of the rotor during rotary spraying is reduced, the rotational speed of the rotor is 5000rpm, and other processes and parameters remain consistent with Example 3.

[Comparative Example 3]

Compared with Example 1, the spacing between the rotors of the rotary spray coating head is further increased, the rotor spacing is the same as Comparative Example 1, and the rotational speed of the rotor during rotary spraying is reduced, the rotational speed of the rotor is the same as Comparative Example 2, and other processes and parameters remain consistent with Example 1.

To verify the effects of the separators in various example, the present disclosure assembles the separators of Examples 1-28 and Comparative Examples 1-3 in lithium-ion secondary batteries respectively, and the preparation process of the lithium-ion secondary batteries is as follows:

(1) Preparation of positive electrode

A positive electrode active material NCM523 (a molar ratio of nickel, cobalt and manganese is 5:2:3, single crystal material), a positive electrode conductive agent selected from acetylene black and a positive electrode binder selected from polyvinylidene fluoride (PVDF) are fully stirred in N-methylpyrrolidone (NMP) according to a weight ratio of 96:2:2 to form a uniform positive electrode slurry. The positive electrode slurry is coated on a positive electrode current collector aluminum foil, and after processes such as drying and cold pressing are performed, a positive electrode sheet is obtained, and a compacted density of the positive electrode sheet is controlled at 2.58g/cm$^3$.

(2) Preparation of negative electrode

A negative electrode active material selected from artificial graphite, a conductive agent selected from acetylene black, an adhesive selected from styrene-butadiene rubber (SBR), and a thickener selected from sodium carboxymethyl cellulose (CMC) are fully stirred and mixed in deionized water according to a weight ratio of 97:1:1:1 to form a uniform negative electrode slurry. The negative electrode slurry is coated on a negative electrode current collector copper foil, and after processes such as drying and cold pressing are preformed, a negative electrode sheet is obtained, and a compacted density of the negative electrode sheet is controlled at 1.65g/cm$^3$.

(3) Preparation of electrolyte

In an argon atmosphere glove box with a water content of <10ppm, EC, PC, and DEC are mixed according to a volume ratio of EC:PC:DEC=1:1:1 to obtain an organic solvent, then the fully dried lithium salt $LiPF_6$ is dissolved in the organic solvent, and after mixing uniformly, an electrolyte with a lithium salt concentration of 1mol/L is obtained.

(4) Assembly of battery

The prepared positive electrode sheet, the separator, and the negative electrode sheet are placed in sequence, so that the separator is located between the positive electrode sheet and the negative electrode sheet to perform an isolation function, and a bare cell is obtained through winding, with a bare cell thickness of 12±0.3mm. The bare cell is hot-pressed by a hot press machine (a hot pressing temperature is 95±2°C, a hot pressing pressure is 4.5MPa, and a hot pressing time is 35s), then packaged with an aluminum-plastic film, and then the prepared electrolyte is injected into the dried bare cell. After processes such as vacuum sealing, standing, formation, and shaping are performed, a lithium-ion secondary battery is obtained.

The lithium-ion secondary batteries prepared in Examples 1 to 28 and Comparative Examples 1 to 3 are subjected to performance testing, the testing process is as follows, and the test results are shown in Table 1:

(1) True density test:

The inorganic particles used for preparing the heat-resistant layer in Examples 1-28 and Comparative Examples 1-3 are used as samples, and with reference to the test method of national standard: QB/T1010-2015, the true density of the samples is obtained;

Alternatively, the batteries prepared in Examples 1-28 and Comparative Examples 1-3 are disassembled to obtain the separators. The separators are cleaned and naturally ventilated to dry and used as samples. The inorganic particles in the samples are separated. With reference to the test method of national standard: QB/T1010-2015, the true density of the samples is obtained;

The separation method is not particularly limited, as long as the method is able to satisfy the testing requirements of QB/T1010-2015, and the methods that may be adopted at least include:

Scheme one, the sample is dissolved in DMAC or NMP and ultrasonically cleaned for 12 hours until the inorganic particles are separated from the base film, filtered and dried to obtain the inorganic particles. DMAC or NMP may be repeatedly used for ultrasonic cleaning until the inorganic particles satisfy the testing requirements of QB/T1010-2015;

Scheme two, the sample is calcined in a muffle furnace at 650°C for 2 hours and then the inorganic particles are sieved out. The muffle furnace may be repeatedly used for calcination until the inorganic particles satisfy the testing requirements of QB/T1010-2015.

(2) Packing density test of the heat-resistant layer:

The separators with the heat-resistant layers on both sides obtained in the first step of Examples 1-28 and Comparative Examples 1-3 are used as samples. A total thickness of the separator samples is obtained through testing by a Mahr thickness gauge. The separator samples are weighed by a precision electronic balance to obtain a total weight. An area of the separator samples is measured and recorded as a total area. The separators are soaked in an NMP solvent and the heat-resistant layers on the separator surfaces are ultrasonically washed off to obtain the base film. A thickness of the base film is tested and recorded. A weight of the base film is obtained by weighing with a precision electronic balance. Then an areal density of the heat-resistant layer is calculated as follows: W=(total weight-weight of base film)/(2×total area), a thickness of the heat-resistant layer=(total thickness-thickness of base film)/2. A packing density of the heat-resistant layer is calculated by dividing the areal density of the heat-resistant layer by the thickness of the heat-resistant layer, and the unit

of the packing density is: g/cm$^3$.

Alternatively, the separators with both heat-resistant layers and adhesive layers on both sides obtained in the second step of Examples 1-28 and Comparative Examples 1-3 are used as samples; or alternatively, the batteries prepared in Examples 1-28 and Comparative Examples 1-3 are disassembled to obtain the separators. The separators are cleaned and naturally ventilated to dry and used as samples. After the adhesive layers on the sample surfaces are removed, the total thickness of the separator samples is obtained through testing by the Mahr thickness gauge. The separator samples are weighed by the precision electronic balance to obtain the total weight. The area of the separator samples is measured and recorded as the total area. The separators are soaked in the NMP solvent and the heat-resistant layers on the separator surfaces are ultrasonically washed off to obtain the base film. The thickness of the base film is tested and recorded. The weight of the base film is obtained by weighing with the precision electronic balance. Then the areal density of the heat-resistant layer is calculated as follows: W=(total weight-weight of base film)/(2×total area). The thickness of the heat-resistant layer=(total thickness-thickness of base film)/2. A test value of the packing density of the heat-resistant layer is calculated by dividing the areal density of the heat-resistant layer by the thickness of the heat-resistant layer. After correcting a characterization result error caused by removing the adhesive layers on the sample surfaces, the packing density value is obtained, and the unit of the packing density is: g/cm$^3$.

The method for removing the adhesive layers on the sample surfaces is not particularly limited, as long as the method may remove the adhesive layers as much as possible without damaging the morphology of the heat-resistant layers, and the methods that may be used at least include:

A Keyence VHX-7000 scanning microscope is used to scan and record the coverage area of the adhesive layers on the sample surfaces, which is recorded as the initial area. The adhesive layers on the separator surfaces are removed by repeatedly applying and removing adhesive tape, until the coverage area of the adhesive layers on the sample surfaces is lower than 5% of the initial area. At this point, the adhesive layers and heat-resistant layers are considered to be sufficiently separated, and the packing density of the heat-resistant layer surfaces is tested accordingly. When using adhesive tape to remove the adhesive layers, compared to directly using the separator without adhesive layers as the sample, a portion of the adhesive layers will inevitably remain on the separator surfaces and there will be some degrees of damage to the heat-resistant layers, therefore compared to the test results of directly using the separator without adhesive layers as the sample, the results will be higher, with a 5% error.

It should be noted that the separators satisfying a specific packing density range provided in the foregoing of the present application are based on the characterization results obtained by using the separators with heat-resistant layers on both sides and with the heat-resistant layers as the outermost layers obtained in the first step of Examples 1-28 and Comparative Examples 1-3 as samples.

(3) Particle size standard deviation test of inorganic particles:

The inorganic particles used for preparing the heat-resistant layers in Examples 1-28 and Comparative Examples 1-3 are used as test samples. The particle size distribution of the inorganic particles is measured by a Malvern 3000 particle size analyzer, and is obtained through data statistical calculation.

Alternatively, the batteries prepared in Examples 1-28 and Comparative Examples 1-3 are disassembled to obtain the separators. The separators are cleaned and naturally air-dried to be used as samples. The inorganic particles in the samples are separated, the particle size distribution of the inorganic particles is measured by a Malvern 3000 particle size analyzer, and is obtained through data statistical calculation.

The separation method is not particularly limited, as long as the method may satisfy the test requirements of the Malvern 3000 particle size analyzer, and the methods that may be adopted at least include:

Scheme one, the sample is dissolved in DMAC or NMP and ultrasonically cleaned for 12 hours until the inorganic particles are separated from the base film, filtered and dried to obtain the inorganic particles. DMAC or NMP may be repeatedly used for ultrasonic cleaning until the inorganic particles satisfy the test requirements of the Malvern 3000 particle size analyzer.

Scheme two, the sample is calcined in a muffle furnace at 650°C for 2 hours and then the inorganic particles are sieved out. The muffle furnace may be repeatedly used for calcination until the inorganic particles satisfy the test requirements of the Malvern 3000 particle size analyzer.

(4) Surface roughness Ra test:

The separators with heat-resistant layers on both surfaces obtained in the first step of Examples 1-28 and Comparative Examples 1-3 are used as samples. The surface roughness Ra of the heat-resistant layers may be measured by a Mahr roughness tester.

Alternatively, the separators with both heat-resistant layers and adhesive layers on both surfaces obtained in the second step of Examples 1-28 and Comparative Examples 1-3 are used as samples; or, the batteries prepared in Examples 1-28 and Comparative Examples 1-3 are disassembled to obtain the separators. The separators are cleaned

and naturally air-dried to be used as samples. After the adhesive layers on the sample surfaces are removed, the separators with relatively intact surfaces are selected. The surface roughness Ra test values are measured by a Mahr roughness tester, and the surface roughness Ra values are obtained after correcting the characterization errors caused by removing the adhesive layers on the sample surfaces.

The method for removing the adhesive layers on the sample surfaces is not particularly limited, as long as the method may remove the adhesive layers as much as possible without damaging the morphology of the heat-resistant layers, and the methods that may be used at least include:

A Keyence VHX-7000 scanning microscope is used to scan and record the coverage area of the adhesive layers on the sample surfaces, which is recorded as the initial area. The adhesive layers on the separator surfaces are removed by repeatedly applying and peeling off adhesive tape until the coverage area of the adhesive layers on the sample surfaces is lower than 5% of the initial area. At this point, the adhesive layers and heat-resistant layers are considered to be sufficiently separated, and the packing density on the heat-resistant layer surfaces is tested accordingly. When using adhesive tape to remove the adhesive layers, compared to directly using the separators without adhesive layers as samples, some adhesive layers will inevitably remain on the separator surfaces and there will be some degrees of damage to the heat-resistant layers, therefore the test results will be larger compared to directly using the separators without adhesive layers as samples, with an error of 10%.

It should be noted that the separators satisfying a specific surface roughness range provided in the foregoing of the present application are based on the characterization results obtained by using the separators with heat-resistant layers on both surfaces, where the heat-resistant layers are the outermost layers, obtained in the first step of Examples 1-28 and Comparative Examples 1-3 as samples.

(5) Effective adhesion degree R-value test of the separator:

The separators with both heat-resistant layers and adhesive layers on both surfaces obtained in the second step of Examples 1-28 and Comparative Examples 1-3 are used as samples; or, the batteries prepared in Examples 1-28 and Comparative Examples 1-3 are disassembled to obtain the separators. The separators are cleaned and naturally air-dried to be used as samples. The area covered within 90% of the length range near the center position of the separator width is the sampling area. The sampling area is equally divided into five portions along the width direction to obtain five equal sampling areas with the same width. In each equal sampling area, separator pieces with a diameter of 90% of the width are taken. Five separator pieces are continuously taken along the same width direction. The initial unit area S1 of the adhesive layers on the separator surfaces is output by scanning with a Keyence VHX-7000. After laminating with the positive electrode sheet with the same area, hot pressing is performed. The hot pressing parameters are: the hot pressing temperature is 95±2°C, the hot pressing pressure is 4.5MPa, and the hot pressing time is 35s. After hot pressing, an external force is applied to gently peel the separator from the positive electrode sheet. The magnitude of the external force is not particularly limited, as long as the separation of the separator and the positive electrode may be achieved. The unit adhesive layer area S2 on the electrode surface sheet is output by scanning with a Keyence VHX-7000. The effective adhesion degree R-value of the separator is obtained as $R=S2/S1$, and the difference between the maximum R-value and the minimum R-value among the five separator pieces is the effective adhesion degree R-value difference.

(6) Test of adhesion between the separator and the electrode:

The separators with both heat-resistant layers and adhesive layers on both surfaces prepared in Examples 1-28 and Comparative Examples 1-3 are used as samples. First, the separator and the electrode sheet are respectively cut into small strips with a size of 50mm in length and 15mm in width. Then the small samples of the separator and the electrode sheet are packed together, and composited into one piece through hot pressing by a flat plate hot press. The hot pressing temperature is 95±2°C, the hot pressing pressure is 4.5MPa, and the hot pressing time is 35s. Then the hot-pressed separator/ electrode sheet composite strip is tested by a universal testing machine using a peeling approach at 180°C to obtain the adhesion between the separator and the electrode sheet.

(7) Cycling performance test of lithium-ion secondary battery:

The batteries prepared in Examples 1-28 and Comparative Examples 1-3 are used as samples. At 25°C, the batteries are charged at a constant current of 0.5C to 4.25V, then charged at a constant voltage of 4.25V until the current is lower than 0.05C, and then discharged at a constant current of 0.5C to 2.8V. This is the first cycle, and the discharge capacity of the first cycle of the lithium-ion secondary battery is recorded; then 300 charge and discharge cycles are performed according to the above method. 3 lithium-ion secondary batteries are taken from each group, and the average value is calculated.

Capacity retention rate of the lithium-ion secondary battery after 300 cycles = (discharge capacity of the lithium-ion secondary battery after 300 cycles / discharge capacity of the first cycle of the lithium-ion secondary battery) × 100%.

(8) Flatness of the cell:

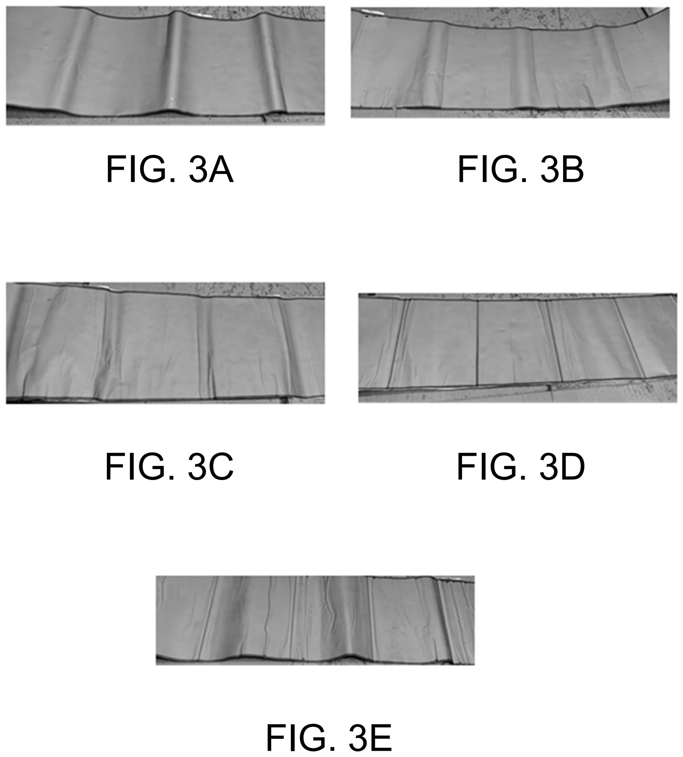

The batteries prepared in Examples 1-28 and Comparative Examples 1-3 are used as samples. The batteries after 300 cycles are disassembled in a fully charged state to confirm the surface flatness of the negative electrode. The surface flatness is classified into five grades from best to worst: A, B, C, D, and E. Among the five grades, grade A cell has a flat surface without obvious wrinkles, see FIG. 3A; grade B cell has minor wrinkles on the surface, see FIG. 3B; grade C cell has relatively obvious wrinkles on the surface, see FIG. 3C; grade D cell has obvious wrinkles on the surface, see FIG. 3D; grade E cell has very severe obvious on the surface, see FIG. 3E.

Table 1: Parameters and performance of Examples 1 to 28 and Comparative Examples 1 to 3

| | Types of inorganic particle | True density ρ (g/cm³ ) | Packin g density A (g/cm³ | R-value | R-value differenc e | Surface roughne ss Ra (μm) | Inorgani c particle size standard | Coatin g amount of the adhesiv | Adhesio n between separato r and | Cell flatnes s | Capacit y retentio n rate after |
|---|---|---|---|---|---|---|---|---|---|---|---|
| | | | ) | | | | deviatio n σ (μm) | e layer (g/m²) | positive electrod e (N/m) | | 300 cycles at 25°C |
| Example 1 | boehmite | 3.07 | 1.12 | 40%,48%,53 %, 62%,69% | 29% | 1.24 | 2.05 | 0.5 | 1.40 | Grade D | 93.70% |
| Example 2 | boehmite | 3.07 | 1.12 | 45%,47%,48 %, 58%,49% | 13% | 1.24 | 2.05 | 0.5 | 1.90 | Grade D | 93.80% |
| Example 3 | boehmite | 3.07 | 1.12 | 46%,52%,58 %, 60%,53% | 14% | 1.24 | 2.05 | 0.5 | 1.60 | Grade D | 93.50% |
| Comparati ve Exam- ple 1 | boehmite | 3.07 | 1.12 | 42%,49%,56 %, 77%,67% | 35% | 1.24 | 2.05 | 0.5 | 1.04 | Grade E | 93.20% |
| Comparati ve Exam- ple 2 | boehmite | 3.07 | 1.12 | 34%,33%,29 %, 30%,22% | 12% | 1.24 | 2.05 | 0.5 | 0.89 | Grade E | 93.15% |
| Comparati ve Exam- ple 3 | boehmite | 3.07 | 1.12 | 11%,23%,18 %, 38%,5% | 33% | 1.24 | 2.05 | 0.5 | 0.87 | Grade E | 93.10% |
| Example 4 | boehmite | 3.07 | 1.12 | 64%,62%,53 %, 57%,59% | 11% | 0.89 | 2.05 | 0.5 | 2.14 | Grade C | 94.10% |
| Example 5 | boehmite | 3.07 | 1.12 | 52%,61%,58 %, 61%,60% | 9% | 0.56 | 2.05 | 0.5 | 2.23 | Grade C | 94.16% |
| Example 6 | boehmite | 3.07 | 1.12 | 61%,62%,59 %, 63%,60% | 4% | 0.33 | 2.05 | 0.5 | 2.25 | Grade C | 94.25% |
| Example 7 | boehmite | 3.07 | 1.52 | 63%,62%,60 %, 59%,61% | 4% | 1.24 | 2.05 | 0.5 | 2.26 | Grade C | 94.30% |
| Example 8 | boehmite | 3.07 | 1.36 | 52%,58%,61 %, 61%,60% | 9% | 1.24 | 2.05 | 0.5 | 2.23 | Grade C | 94.16% |
| Example 9 | boehmite | 3.07 | 1.24 | 58%,50%,62 %, 61%,60% | 12% | 1.24 | 2.05 | 0.5 | 2.21 | Grade C | 94.13% |

(continued)

| | Types of inorganic particle | True density ρ (g/cm³ ) | Packin g density A (g/cm³ ) | R-value | R-value differenc e | Surface roughne ss Ra (μm) | Inorgani c particle size standard deviatio n σ (μm) | Coatin g amount of the adhesiv e layer (g/m²) | Adhesio n between separato r and positive electrod e (N/m) | Cell flatnes s | Capacit y retentio n rate after 300 cycles at 25°C |
|---|---|---|---|---|---|---|---|---|---|---|---|
| Example 10 | boehmite | 3.07 | 1.14 | 62%,53%,62 %, 64%,58% | 11% | 1.25 | 1.80 | 0.5 | 2.21 | Grade C | 94.13% |
| Example 11 | boehmite | 3.07 | 1.12 | 59%,62%,60 %, 59%,63% | 4% | 1.23 | 0.25 | 0.5 | 2.28 | Grade C | 94.33% |
| Example 12 | boehmite | 3.07 | 1.13 | 63%,54%,60 %, 61%,58% | 9% | 1.24 | 1.06 | 0.5 | 2.22 | Grade C | 94.15% |
| Example 13 | boehmite | 3.07 | 1.37 | 73%,71%,66 %, 65%,68% | 8% | 0.57 | 2.05 | 0.5 | 2.52 | Grade B | 94.90% |
| Example 14 | boehmite | 3.07 | 1.24 | 64%,69%,68 %, 74%,67% | 10% | 0.96 | 2.05 | 0.5 | 2.48 | Grade B | 94.80% |
| Example 15 | boehmite | 3.07 | 1.53 | 74%,74%,75 %, 77%,77% | 3% | 0.58 | 2.05 | 0.5 | 2.67 | Grade B | 95.00% |
| Example 16 | boehmite | 3.07 | 1.54 | 71%,70%,69 %, 69%,72% | 3% | 0.58 | 1.06 | 0.5 | 2.76 | Grade B | 95.10% |
| Example 17 | boehmite | 3.07 | 1.64 | 68%,71%,69 %, 72%,69% | 4% | 0.23 | 1.80 | 0.5 | 2.42 | Grade B | 94.76% |
| Example 18 | boehmite | 3.07 | 1.54 | 66%,70%,71 %, 69%,72% | 6% | 0.93 | 1.06 | 0.5 | 2.58 | Grade B | 94.93% |
| Example 19 | boehmite | 3.07 | 1.37 | 65%,69%,69 %, 71%,70% | 6% | 1.24 | 1.06 | 0.5 | 2.42 | Grade B | 94.75% |
| Example 20 | boehmite | 3.07 | 1.53 | 70%,68%,68 %, 69%,71% | 3% | 1.25 | 1.80 | 0.5 | 2.61 | Grade B | 94.96% |
| Example 21 | boehmite | 3.07 | 1.24 | 71%,72%,74 %, 74%,71% | 3% | 1.23 | 0.25 | 0.5 | 2.74 | Grade B | 95.07% |
| Example 22 | boehmite | 3.07 | 1.36 | 79%,76%,77 %, 77%,78% | 3% | 0.72 | 1.06 | 0.5 | 2.89 | Grade A | 95.70% |

(continued)

| | Types of inorganic particle | True density ρ (g/cm$^3$ ) | Packin g density A (g/cm$^3$ ) | R-value | R-value differenc e | Surface roughne ss Ra (μm) | Inorgani c particle size standard deviatio n σ (μm) | Coatin g amount of the adhesiv e layer (g/m$^2$) | Adhesio n between separato r and positive electrod e (N/m) | Cell flatnes s | Capacit y retentio n rate after 300 cycles at 25°C |
|---|---|---|---|---|---|---|---|---|---|---|---|
| Example 23 | boehmite | 3.07 | 1.53 | 78%,77%,79 %, 80%,78% | 3% | 0.69 | 0.25 | 0.5 | 2.88 | Grade A | 95.70% |
| Example 24 | boehmite | 3.07 | 1.23 | 76%,76%,77 %, 76%,79% | 3% | 0.38 | 1.80 | 0.5 | 2.87 | Grade A | 95.69% |
| Example 25 | alumina | 3.95 | 1.76 | 76%,77%,73 %, 75%,76% | 4% | 0.58 | 1.24 | 0.5 | 2.89 | Grade A | 95.70% |
| Example 26 | titanium dioxide | 4.26 | 1.93 | 73%,75%,75 %, 77%,76% | 4% | 0.61 | 1.26 | 0.5 | 2.95 | Grade A | 95.78% |
| Example 27 | barium ti-tanate | 6.02 | 2.73 | 78%,79%,76 %, 77%,78% | 3% | 0.63 | 1.35 | 0.5 | 3.01 | Grade A | 95.79% |
| Example 28 | magnesiu m hydro-xide | 2.36 | 1.05 | 76%,75%,77 %, 77%,75% | 2% | 0.59 | 1.29 | 0.5 | 2.93 | Grade A | 95.76% |

Referring to Table 1, comparing Examples 1-3 with Comparative Examples 1-3, while other conditions remain the same, by regulating the spacing between coating rotors and the rotor speed during the coating of the adhesive layer, and adjusting the distance of the spray coating coverage area between each rotor and the morphology of the spray points, the purpose of regulating the effective adhesion degree R-value and the effective adhesion degree difference of the separator is achieved, thereby regulating the distribution of adhesion between the separator and the electrode. Also, it is possible to achieve the effect of improving the flatness of the cell and the cycling performance of the battery after multiple cycles. It may be seen that: when the R-value is between 40%-70%, and the R-value difference is below 30%, the cell interface flatness after the cycle is better, and the cycling performance of the battery is better. The smaller the difference of the effective adhesion degree R-value, the more uniform the distribution of the effective adhesion between the separator and the electrode, and the higher the capacity retention rate of the corresponding battery after 300 cycles at 25°C. When the difference of the effective adhesion degree R-value is higher than 30% (Comparative Example 1), the flatness of the cell surface is poor, resulting in a decrease in the cycling performance of the battery. If the effective adhesion degree R-value of the separator is less than 40%, even if the effective adhesion degree R-value difference is small (Comparative Example 2), it may affect the surface flatness of the cell, thereby resulting in poor cycling performance.

Examples 4-6 regulate the leveling speed of the heat-resistant layer by regulating the solid content of the slurry of the heat-resistant layer to adjust the surface roughness Ra of the heat-resistant layer. Comparing the performance data of Example 2 and Examples 4-6, at least the following may be obtained: when the surface roughness Ra of the heat-resistant layer is further controlled to be less than 1μm, the R-value of the separator is improved compared to Examples 1-3, and the R-value difference is also relatively reduced, the adhesion between the separator and the electrode is further improved, the cell surface after cycling is flatter, and the cycling performance of the battery is further enhanced. This is because the smaller the surface roughness of the heat-resistant layer, the higher the surface flatness of the heat-resistant layer, and the adhesive layer coated on the surface of the heat-resistant layer may achieve a larger contact area, thereby enhancing the adhesion between the adhesive layer and the surface of the heat-resistant layer. In this way, it is possible to enable the adhesion and binding force between the separator as a whole and the electrode sheet to be further increased. When the negative electrode active material expands due to multiple cycles, the binding force of the bare cell as a whole may reduce the pores between the positive and negative electrodes and the separator, avoiding the negative electrode sheet from wrinkling with expansion, thereby achieving better cycling performance of the battery and better improvement of the cell interface. Among Examples 4-6, as the surface roughness decreases, the proportion of separators having an R-value greater than 60% exhibits an upward trend, and the R-value difference exhibits a narrowing trend.

In Examples 7-9, by adjusting the size of the mesh aperture used during coating of the heat-resistant layer, the transfer rate of the slurry of the heat-resistant layer to the porous base film during coating is controlled, thereby adjusting the packing density of the heat-resistant layer. A comparison of the test results of Example 2 and Examples 7-9 demonstrates at least that, when the packing density of the heat-resistant layer is in the range of $0.4\rho$ to $0.5\rho$, the overall R-value of the separator is increased, the adhesion between the separator and the electrode sheets is further enhanced, the surface of the cell after cycling is flatter, and the cycling performance of the battery is further improved. This is because, relative to Example 2, the heat-resistant layer is more densely packed, and when adhesion is formed between the separator adhesive layer and the positive and negative electrode sheets through hot pressing, the adhesion may be maximized, thereby achieving a superior cell shaping effect and enhancing cell performance.

In Examples 10-12, the standard deviation of the particle size of the inorganic particles within the heat-resistant layer is adjusted so as to modulate the adhesion between the separator and the electrode sheet, thereby affecting the cell shaping effect and cycling performance. Test results indicate that when the particle size standard deviation $\sigma$ satisfies $\sigma \leq 0.9*d$ (where d denotes the thickness of the heat-resistant layer), the adhesion between the separator and the electrode sheet is further increased, the surface of the cell after cycling is flatter, and the cycling performance of the battery is further improved. This is attributable to the fact that a smaller particle size standard deviation reflects a more uniform particle size distribution; employing inorganic particles of uniform particle size for packing yields a uniform, smooth, and dense packed morphology, thereby further increasing the effective adhesion area between the separator and the electrode sheet and resulting in greater adhesive strength therebetween.

In comparison with Examples 4-6, 7-9, and 13-15, by adjusting the process parameters of the heat-resistant layer and the adhesive layer such that the separator satisfies an effective adhesion degree R-value of 40-80% and an R-value difference of less than 30%, while the heat-resistant layer exhibits a surface roughness Ra < 1 and a packing density within $0.4\rho$-$0.5\rho$, the adhesion between the separator and the electrode sheet is further enhanced relative to cases meeting only a single condition (e.g., Examples 4-6 satisfying only the roughness requirement, and Examples 7-8 satisfying only the packing-density requirement). The cell exhibits higher flatness after cycling and improved shaping results, and the cycling performance of the cell is further improved. A comparison between Example 15 and Example 2 at least demonstrates that, through simultaneous control of the packing density A and the surface roughness of the heat-resistant layer, the R-value may be further increased and the R-value difference reduced, thereby improving the cycling performance of the battery.

In comparison with Examples 4-6, 10-12, and 16-18, by adjusting the process parameters of the heat-resistant layer and the adhesive layer such that the separator satisfies an effective adhesion degree R-value of 40-80% and a R-

value difference of less than 30%, and such that the heat-resistant layer exhibits a surface roughness Ra < 1 and the standard deviation $\sigma$ of the inorganic particle size satisfies $\sigma \leq 0.9*d$ (where d denotes the thickness of the heat-resistant layer), the adhesion between the separator and the electrode sheet is further increased relative to cases satisfying only a single condition (e.g., Examples 4-6 satisfy only the roughness requirement; Examples 10-12 satisfy only the particle-size standard deviation and specific surface area). As a result, the cell exhibits higher flatness after cycling, improved shaping quality, and further enhanced cycling performance. Moreover, a comparison between Example 18 and Example 2 at least demonstrates that, by simultaneously controlling the surface roughness and the standard deviation of particle size and the specific surface area of the inorganic heat-resistant particles, the R-value may be further increased and the R-value difference reduced, thereby improving the cycling performance of the battery.

By comparing Examples 7-9, 10-12, and 19-21, it is shown that, when the process parameters of the heat-resistant layer and the adhesive layer are adjusted such that the separator simultaneously satisfies an effective adhesion R-value of 40%-80% and an R-value difference of less than 30%, as well as a packing density of the heat-resistant layer of $0.4\rho$-$0.5\rho$ and a standard deviation $\sigma$ of the inorganic particle size satisfying $\sigma \leq 0.9*d$ (where d denotes the thickness of the heat-resistant layer), then, as compared with satisfying only a single condition (e.g., Examples 7-9 satisfy only the packing density; Examples 10-12 satisfy only the particle-size standard deviation), the adhesion between the separator and the electrode sheet is further increased, the flatness of the cell after cycling is improved, the shaping effect is enhanced, and the cycling performance of the cell is further improved.

By comparing Examples 13-15 and Examples 16-18, 19-21, and 22-24, by adjusting the process parameters of the heat-resistant layer and the adhesive layer such that the separator simultaneously satisfies an effective adhesion degree R-value of 40%-80% and an R-value difference of less than 30%, a surface roughness of the heat-resistant layer of Ra < 1, a standard deviation $\sigma$ of the inorganic particle size satisfying $\sigma \leq 0.9*d$ (where d denotes the thickness of the heat-resistant layer), as well as a packing density of the heat-resistant layer of $0.4\rho$-$0.5\rho$, it is possible, upon hot-pressing the separator and the adhesive layer with the positive and negative electrode sheets to form adhesion, to maximize the resulting adhesion, thereby achieving optimal cell shaping and yielding optimal cycling performance.

Comparing Examples 22-24 with Examples 25-28, upon substitution with different inorganic particles, provided that the effective adhesion R-value is 40%-80% and the R-value difference is less than 30%, the surface roughness Ra of the heat-resistant layer is less than 1, the standard deviation $\sigma$ of the inorganic particle size satisfies $\sigma \leq 0.9*d$ (where d denotes the thickness of the heat-resistant layer), and the packing density of the heat-resistant layer is $0.4\rho$-$0.5\rho$, the adhesion developed after hot pressing between the separator and the adhesive layer and the positive and negative electrode sheets may be maximized, thereby achieving an optimal cell shaping effect and optimal cycling performance of the cell.

In the present disclosure, by adjusting the ratio of the effective adhesion area to the theoretical adhesion area, a predetermined level of adhesion is maintained between the separator and the electrode sheet. Additionally, by controlling the percentage difference between the effective adhesion area and the theoretical adhesion area to be less than 30%, the uniformity of adhesion between the separator and the electrode sheet is improved, wrinkling deformation of the cell caused by electrode expansion after cycling is mitigated, flatness is enhanced, and the cycling performance of the battery is thereby improved. Furthermore, by adjusting the surface roughness of the heat-resistant layer of the separator and the standard deviation of the particle size of the inorganic particles in the heat-resistant layer, the surface flatness of the heat-resistant layer may be regulated. Within a prescribed range, higher surface flatness of the heat-resistant layer enables an adhesive layer disposed on the surface of the heat-resistant layer to obtain a larger contact area, thereby strengthening the adhesion of the adhesive layer to the surface of the heat-resistant layer. In addition, by further specifying the packing density of the heat-resistant layer, the packing of the heat-resistant layer is rendered denser. In particular, the surface of the heat-resistant layer is prevented from exhibiting an uneven, undulating state caused by loose stacking of inorganic particles, thereby yielding a low-roughness surface of the heat-resistant layer. When adhesion is formed after hot pressing between the adhesive layer and the positive and negative electrode sheets, the adhesion may be maximized, thereby more effectively achieving an optimal cell-shaping effect and enhancing cell performance. Accordingly, the present disclosure effectively overcomes some practical problems in the related art and therefore has high utility and practical significance.

## Claims

**1.** A separator (100), comprising:

a porous base film (101);
a heat-resistant layer (102), disposed on at least one surface of the porous base film (101);
an adhesive layer (103), at least disposed on a surface of the heat-resistant layer (102) opposite to a surface in contact with the porous base film (101);

an effective adhesion degree R-value of a side of the separator (100) provided with the heat-resistant layer (102) is 40%-80%, and a difference between a maximum value and a minimum value of the effective adhesion degree R-value is <30%, wherein, the effective adhesion degree R-value indicates a ratio of an effective adhesion area of the separator (100) to a theoretical adhesion area.

**2.** The separator (100) according to claim 1, wherein a surface roughness Ra of the heat-resistant layer (102) is $<1\mu m$.

**3.** The separator (100) according to claim 1, wherein the heat-resistant layer (102) comprises inorganic particles and an adhesive, a packing density of the heat-resistant layer (102) is $A = (0.4\sim0.5)\times\rho$, wherein $\rho$ indicates a true density of the inorganic particles, and a unit of measurement is $g/cm^3$.

**4.** The separator (100) according to claim 1, wherein the heat-resistant layer (102) comprises inorganic particles and an adhesive, a particle size standard deviation of the inorganic particles is $\sigma \leq 0.9*d$, and d indicates a thickness of the heat-resistant layer (102).

**5.** The separator (100) according to claim 3 or 4, wherein a volume ratio of the inorganic particles in the heat-resistant layer (102) is 80%-99%.

**6.** The separator (100) according to claim 1, wherein a single-side thickness of the heat-resistant layer (102) is $0.5\mu m$-$5\mu m$.

**7.** The separator (100) according to claim 3 or 4, wherein the inorganic particles are selected from at least one of alumina, hydrated alumina, aluminum hydroxide, silicon dioxide, titanium dioxide, barium sulfate, barium titanate, magnesium hydroxide, and magnesium oxide.

**8.** The separator (100) according to claim 1, wherein a single-side coating amount of the adhesive layer (103) is $0.1g/m^2$-$2g/m^2$.

**9.** The separator (100) according to claim 3 or 4, wherein the adhesive is selected from at least one of polyacrylonitrile and copolymers thereof, polyacrylic acid and copolymers thereof, polyacrylate and copolymers thereof, styrene-butadiene copolymer, styrene-acrylate copolymer, and fluorine-based polymer materials.

**10.** An electrochemical device, comprising a positive electrode sheet, a negative electrode sheet, and the separator (100) according to any one of claims 1 to 9 provided between the positive electrode sheet and the negative electrode sheet.

100
103
102
101

FIG. 1

103
102
100
101

FIG. 2

FIG. 3A

FIG. 3B

FIG. 3C

FIG. 3D

FIG. 3E

Europäisches
Patentamt
European
Patent Office
Office européen
des brevets

# EUROPEAN SEARCH REPORT

Application Number
EP 26 15 7424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 401 230 A1 (TEIJIN LTD [JP]) 17 July 2024 (2024-07-17) * example 1; claims; paragraph 8 * ----- | 1-10 | INV. H01M50/46 H01M50/489 H01M50/417 H01M50/449 H01M50/451 H01M50/457 H01M10/0525 |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 4 May 2026 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 7424

This annex lists the patent family members relating to the patent documents cited in the above-mentioned European search report. The members are as contained in the European Patent Office EDP file on
The European Patent Office is in no way liable for these particulars which are merely given for the purpose of information.

04-05-2026

| Patent document cited in search report | Publication date | Patent family member(s) | Publication date |
|---|---|---|---|
| EP 4401230 A1 | 17-07-2024 | CN 117916941 A | 19-04-2024 |
| | | EP 4401230 A1 | 17-07-2024 |
| | | JP 7231687 B1 | 01-03-2023 |
| | | JP 2023040937 A | 23-03-2023 |
| | | KR 20240035892 A | 18-03-2024 |
| | | US 2024372220 A1 | 07-11-2024 |
| | | WO 2023037989 A1 | 16-03-2023 |

EPO FORM P0459

For more details about this annex : see Official Journal of the European Patent Office, No. 12/82